(19) Europäisches Patentamt

European Patent Office

Office européen des brevets

(11) EP 0 578 882 B1

## (12) EUROPEAN PATENT SPECIFICATION

(45) Date of publication and mention
of the grant of the patent:
**02.01.1997 Bulletin 1997/01**

(51) Int Cl.6: **G03G 15/05**

(21) Application number: **92306575.9**

(22) Date of filing: **17.07.1992**

(54) **Ionographic imaging**

Ionographische Bilderzeugung

Formation d'image ionographique

(84) Designated Contracting States:
**DE FR GB**

(43) Date of publication of application:
**19.01.1994 Bulletin 1994/03**

(73) Proprietor: **XEROX CORPORATION
Rochester New York 14644 (US)**

(72) Inventor: **Stearns, Richard G.
No.E-243 Mountain View, California 94040 (US)**

(74) Representative: **Johnson, Reginald George et al
Rank Xerox Ltd
Patent Department
Parkway
Marlow Buckinghamshire SL7 1YL (GB)**

(56) References cited:
**US-A- 4 996 425          US-A- 5 087 933**

- **PATENT ABSTRACTS OF JAPAN vol. 16, no. 26 (M-1202) 22 January 1992 ; & JP-A-03 239 565**
- **PATENT ABSTRACTS OF JAPAN vol. 12, no. 182 (M-702) 27 May 1988 ; & JP-A-62 292 449**
- **PATENT ABSTRACTS OF JAPAN vol. 6, no. 237 (P-157) 25 November 1982 ; & JP-A-57 136 665**

## Description

The present invention is a method and apparatus that provides a system for improving the addressability and density of an ionographic printing image by crosstalk correction and ion beam positioning of individual pixel charges, using compensating modulation voltages, also known as "grey levels", applied directly to individual modulation electrodes in the print head.

Ionographic printing is that type of marking in which charged particles are created at a remote location from the point at which a charged latent image is formed on a dielectric surface of a conductive substrate receptor. A stream of ions, assisted in some known systems by a fluid stream, generally an air stream, passes through a channel in the print head in which is placed a linear array of modulation electrode fingers, one for each pixel in a line of the printed image. Ions are created in a chamber, for example, by electrical discharge from a corona wire, maintained at very high positive voltage. During the printing process, the stream of ions is projected toward the receptor, usually a drum, which is placed at a high, negative electrical potential so as to attract the ions to its dielectric surface. Those ions which are projected from the printing head are pulled to the dielectric, overcoated surface of the receptor where they form a charge image, ready for immediate xerographic development into a printed image. Application of low modulation voltages to the electrode fingers creates an electric field which can deflect the ions and locally eliminate them from the stream, producing varying densities of ions and thus varying density of the subsequently printed image. Three patents, US-A-4,463,363, US-A-4,524,371, and US-A-4,644,373, disclose different forms of a fluid jet assisted ion projection printing apparatus.

In ionographic printing, improvement in addressability and correction of the reduction in image density, resulting from deflection of charges in the ion beam caused by redirection of the electric field associated with one of the modulation electrode fingers held at the modulation voltage, into an ion stream associated with an adjacent modulation electrode, referred to as modulation electrode crosstalk interaction, is important in producing high-quality printed images. The crosstalk problem is very troublesome in binary and grey-scale printing. Modulation electrode crosstalk interaction is a phenomenon in which the electric field produced in adjacent, fully- or partially-modulated electrodes has the unwanted effect of locally eliminating ions from the projected stream, thus reducing the density of charges deposited on the receptor by the image-forming ion stream. Unless these crosstalk effects on the ion stream are corrected, unacceptable variations occur in the printed image of fine lines and edges.

Known systems have addressed the problem of controlling ion perturbation at the imaging surface, known as blooming, caused by the effect of previously deposited ions on the path of subsequent ions directed toward the imaging surface, by use of control electrodes positioned adjacent the ion stream path.

The problem of correcting ionographically printed images for crosstalk interaction has presented a major challenge to designers of ionographic devices. The development of a straightforward method of compensating for interaction between adjacent modulation electrodes in an ionographic printing head is a long-felt need, and its solution would represent a major technological advance in the ionographic printing field.

JP-A-3 239 565 (D1) discloses altering the modulation voltage on non-ion emitting electrodes which are adjacent ion emitting electrodes by applying a fixed voltage to the non-ion emitting electrodes.

The present invention is a method of positioning and compensating individual pixel charges for a loss of ion current because of crosstalk interaction caused by redirection of an electric field associated with one of a plurality of modulation electrodes held at a modulating voltage ($V_M$) the modulation electrodes being held at a different voltage during printing in an ionographic imaging device having a print head having a source of ions, a medium for moving ions in a stream through a modulation channel, held at a reference potential by connection to a reference voltage ($V_H$), and in which a print array including the modulation electrodes is positioned and individually biased by a modulation voltage ($V_M$), in response to a plurality of printing driver commands, the modulating voltage creating the electric field which locally removes ions from the stream to modulate said stream projected as an ion current past each of said plurality of modulation electrodes from said print head to form an image of said individual pixel charges on a dielectric surface of a receptor, the method being characterised by the steps of: implementing an image-dependent algorithm for determining a partial modulation voltage ($V_M'$) related to each one of the modulation electrodes held at the modulation voltage ($V_M$) adjacent to each modulation electrode held at a different voltage during printing, in response to said printing driver commands, said algorithm determining the partial modulation voltage in image-wise manner, dependent on the crosstalk interaction; providing, in response to said plurality of printing driver commands, a plurality of modified printing commands bearing information relating the reference, modulation and partial modulation voltages in accordance with said algorithm to each modulation electrode, and addressing each modulation electrode in said print array and biasing each modulation electrode with said reference modulation or the partial modulation voltage in accordance with the modified printing commands.

The present invention will now be described by way of example with reference to the accompanying drawings, in which:

Figure 1 schematically shows an ionographic print head for use with the present invention, in printing relationship with an imaging surface;

Figure 2(a) is a cross-sectional view through the modulation channel of an ionographic print head, schematically showing the electric field associated with three modulation electrodes placed at a potential which cuts off the flow of ion current to the imaging surface. Figure 2(a) is useful in understanding the effects of electric field crosstalk;

Figure 2(b) is a cross-sectional view through the modulation channel of an ionographic print head, schematically showing interaction in the electric field associated with three modulation electrodes, the center one of which is placed at a potential permitting the flow of ions to the imaging surface, and the two adjacent ones are placed at a potential which cuts off the flow of ions to the imaging surface;

Figure 3 is a schematic diagram of a preferred embodiment of the present invention used in an ionographic print head, useful for the limited case of binary printing;

Figure 4 is a schematic diagram of another aspect of the present invention used in an ionographic print head, useful for the general case of grey-level printing;

Figure 5(a) is a graph of the ion charge profile of various pixel spots at the imaging surface, uncorrected for crosstalk;

Figure 5(b) is a graph of the charge profile of various pixel spots at the imaging surface, corrected for crosstalk;

Figure 6 is a plot of the charge profile of a single pixel spot on the imaging surface with various partial modulation voltages applied to adjacent modulation electrodes, showing how the centroid of the pixel spot can be moved thereby; and

Figure 7 is a schematic diagram of several modulation electrodes in printing position, useful in understanding the construction of grey-scale algorithms.

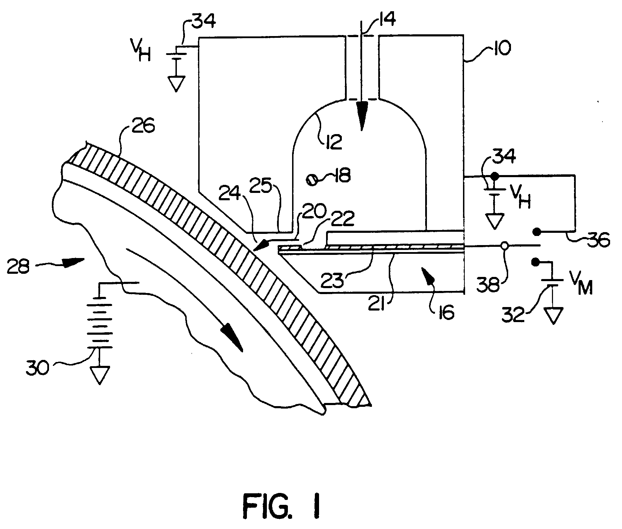

Figure 1 shows a schematic representation of a cross-section of the printing head 10 of a fluid jet assisted ionographic printing apparatus similar to that described in US-A-4,644,373.

Within head 10 is an ion generation chamber 12 including a corona wire 18, supported within the chamber 12 and supplied with a high potential voltage on the order of several thousand volts D.C. The corona discharge around corona wire 18 creates a source of ions of a given polarity (preferably positive) which are attracted to the wall of the ion chamber 12, held at a potential of $V_H$, and fill the chamber 12 with a space charge.

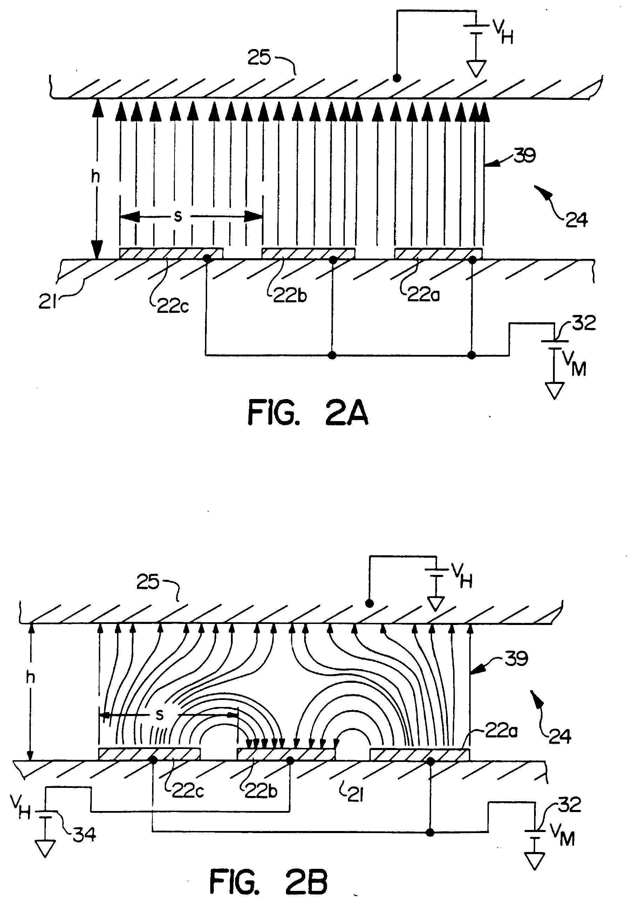

A pressurized transport fluid 14, preferably air, from a suitable source is introduced to the ion chamber 12 to serve as a medium for moving ions in a stream. A modulation channel 24 directs the transport fluid 14 out of the chamber 12. As the transport fluid 14 passes through the ion chamber 12 it entrains ions and moves them into the modulation channel 24 past modulation electrodes 22. During the printing process, ions are allowed to pass out of the head 10, through the modulation channel 24 as a stream, and are directed toward a dielectric surface 26 on a receptor 28, placed at a high negative potential, where they form a charge image, ready for xerographic development (not shown) into a printed image. The modulation electrodes 22 are individually switched between a modulation voltage source 32 and a reference potential 34 by a switching arrangement 38. In the case depicted, applying a low, positive modulation voltage $V_M$ to a modulation electrode 22 locally eliminates ions from the ion stream. Applying reference voltage $V_H$ to a modulation electrode 22 allows a stream of ions to flow past the modulation electrode 22. The resultant ion current 20 is attracted to the receptor 28. The switching arrangement 38 may produce a binary image, for example black and white, or grey levels may be introduced, by providing a continuously variable modulation voltage $V_M$ to the modulation electrodes 22. The modulation electrodes 22 are arranged in a print array 16 constructed as a thin film layer 21 supported by an insulating substrate 23. In Figure 1 and in Figures 2(a), 2(b), 3 and 4, the modulation voltage is schematically shown as being supplied by a battery. The modulation voltage $V_M$ may have any value consistent with the printing circumstances, and it may be fixed or variable. As an alternative to an ionographic printing head 10 with fluid jet assisted ion flow, other ionographic print heads, with another medium for transporting the ion stream, may be provided. The ion stream could be field directed to the receptor 28. While the description herein assumes positive ions, appropriate changes could be made so that negative ions could be used.

Figures 2(a) and 2(b) each depict a cross-section of the relatively narrow modulation channel 24 of head 10, showing three of the complement of modulation electrodes 22a,b,c in the print array 16. Modulation electrodes 22a,b,c and the opposite wall 25 of the modulation channel 24 (held at reference potential $V_H$) comprise a capacitor, across which a voltage source 32 may be applied, when connected by switch 38. Thus, an electric field 39, extending in a direction transverse to the direction of transport fluid flow, is selectively established between a given modulation electrode 22a,b,c and the opposite wall 25.

Figure 2(a) schematically shows an electric field 39 associated with the modulation electrodes 22a,b,c, when they, and all other modulation electrodes 22 not shown, are at a modulation voltage $V_M$. The electric field 39 influences the ion stream passing between the electrodes 22a,b,c and the opposite wall 25, affecting the flow of ion current 20 leaving the ion projector toward the imaging surface 26 by locally removing ions from the ion stream. The voltage applied to each of the electrodes 22, relative to the potential of the opposite wall 25, determines the degree to which that portion of the ion "beam" passing between each of the electrodes 22 and the wall 25 is affected.

Figure 2(b) depicts "writing" of a selected spot which forms part of an image, by connecting one modulation electrode 22b to the reference potential source 34, held at $V_H$, while the adjacent modulation electrodes 22a, 22c and all others not shown in the print array 16 are held at $V_M$. The ion stream passing between the modulation electrode 22b and the opposite wall is allowed to leave the ion projector, and the transport fluid will carry the "writing" ions to accumulate on the receptor 28. In normal printing, the resolution of this process is roughly about the center-to-center spacing "s" of the modulation electrodes 22. For example, by positioning modulation electrodes at a density of 12 per mm, an ion "beam" may be generated that will produce an ionographic image of 12 spots per mm resolution. Each single spot is sometimes referred to as a "pixel"(picture element). The "writing" process is affected by a number of factors, one of the most important of which is the phenomenon of electric field crosstalk interaction between adjacent modulation electrodes 22.

Figure 2(b) shows that the electric field lines associated with the modulation electrodes 22a,c, held at $V_M$, when influenced by modulation electrode 22b, held at $V_H$ no longer extend directly across the transverse section of the modulation channel 24, but have a component along the length dimension of the modulation channel 24 which interacts with the ion stream flowing past the modulation electrode 22b held at $V_H$. The effect of this interaction is to reduce the number of ions flowing in the "beam" associated with the "writing" modulation electrode 22b held at $V_H$. In addition, the horizontal components of the electric field 39 act to deflect the ion "beam" laterally as it passes through the modulation channel 24. The configuration of Figure 2(b) typically corresponds to the "writing" of a single pixel line. The effect of crosstalk interaction in this case is mainly seen to be a reduction in width of a single pixel spot. Such a reduction in spot profile has, in the past, been considered a disadvantage and crosstalk interaction between neighbouring modulation electrodes 22 has been considered undesirable.

Crosstalk interaction is very sensitive to the ratio of modulation channel height "h" to the spacing "s" of modulation electrodes 22. The effect is clearly more pronounced for larger values of h/s. For a typical device, h/s is about 1.5. The level of crosstalk interaction that accompanies this ratio reduces the integrated ion current 20 of a single pixel spot by about 70 percent of expected integrated ion current 20. The present invention uses to advantage that crosstalk interaction which up to now has been considered disadvantageous.

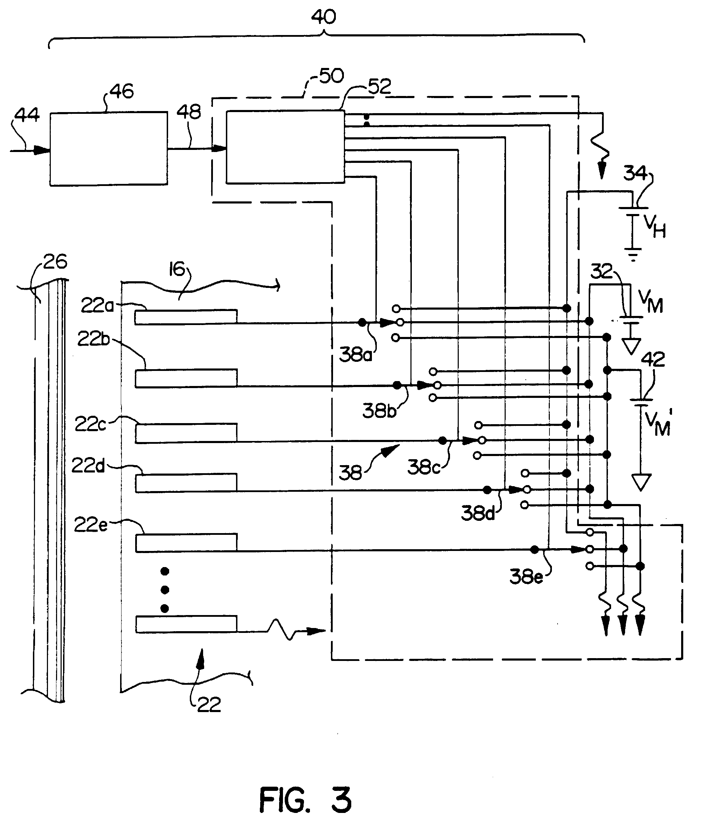

Figure 3 depicts schematically a preferred embodiment of the present invention used in an ionographic printing device, useful for the limited case of binary printing, that is, printing of an image in two colors such as black and white. In accordance with the present invention, the effect of crosstalk interaction is used to increase the density of the ions flowing to the imaging dielectric surface 26 of the receptor 28 by increasing the integrated flow of ion current 20.

A charge output compensator 40 for compensating each "writing" spot, having a data processor 46, which includes a pre-defined and implemented algorithm and a controller 50, is used to correct the printing driver commands 44 normally used in ionographic devices to produce the image. Modulation voltage $V_M$ at each modulation electrode 22, defined by the printing driver commands 44, is appropriately replaced by the data processor 46 and controller 50 with a partial modulation voltage $V_M'$ having a value between the reference voltage $V_H$ and full modulation voltage $V_M$. The invention thereby increases the density of ion charges at the imaging dielectric surface 26 and increases the ability to position the pixel spot on the dielectric surface 26. The ability to position more precisely the edge of a printed line or character is a powerful aide in reducing edge "jaggedness", thereby greatly improving printed image quality.

The data processor 46 and controller 50 may be integrated in a conventional central processing unit (CPU) such as a personal computer. The pre- defined algorithm is implemented therein as programmed software or firmware. The algorithm is pre-defined before the imaging processing takes place, with respect to the image-dependent modulation voltage states, having regard for the characteristics of the printing head 10 and dimensions of the modulation channel 24. Typical algorithms and their development are discussed, infra.

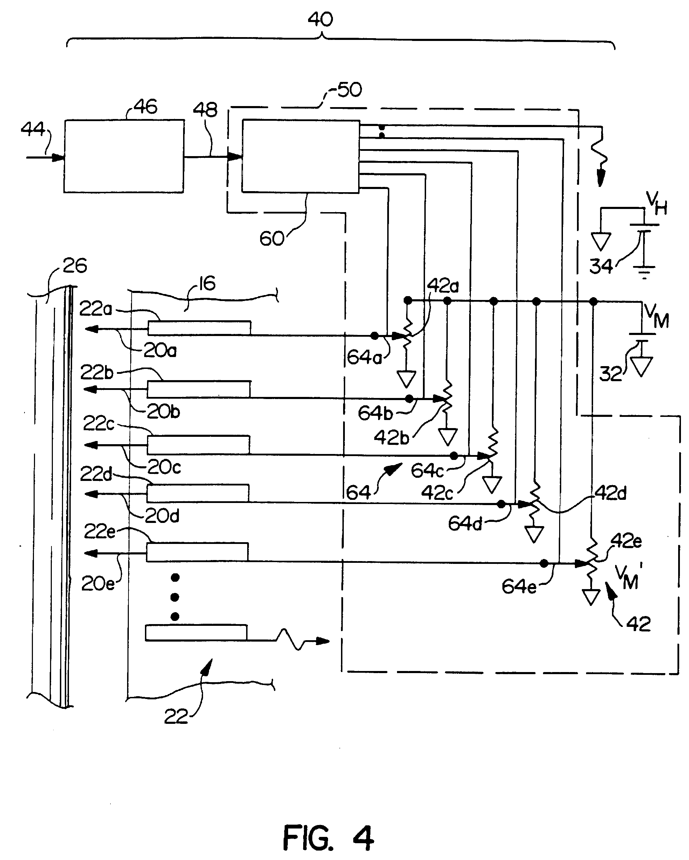

Figure 3 shows a portion of print array 16 containing several individual modulation electrodes 22a,b,c,d,e. The modulation electrodes 22a,b,c,d,e are connected selectively to voltage source 34, voltage source 32 and voltage source 42 through three position switches 38a, b,c,d,e. The switches are positioned by means of a switch controller 52 in response to modified printing commands 48 supplied by a data processor 46. Reference to this simplified case is useful in understanding the invention and is not intended to limit the application of the invention to such a case. The three position switches 38 may be replaced with other electronic devices and their function may be integrated within the switch controller 52. The more general case of grey-level printing is presented in the arrangement shown in Figure 4.

In the arrangement of Figure 3, printing driver commands 44, normally produced in a central processing unit remote from the printing device, are intercepted in the data processor 46 in which the predefined algorithm is implemented. The algorithm responds, by conventional data processing means, to a plurality of printing driver commands 44 and constructs a plurality of modified printing commands 48. The modified printing commands 48 then drive the switch controller 52 which, in accordance with the modified printing commands 48, positions switches 38 to connect voltage source 34, voltage source 32 or voltage source 42 to each one of modulation electrodes 22. The algorithm in this arrangement is pre- defined and implemented in the following manner:

The following notation is used to indicate the voltage states of the modulation electrodes 22: a value of 1 indicates the modulation electrode is to be connected to a reference voltage $V_H$, allowing ion current 20 to flow; a value of 0 indicates the modulation electrode 22 is to be connected to a full modulation voltage $V_M$ effectively blocking ion current flow; values between 0 and 1 indicate the modulation electrode 22 is to be connected to a partial modulation voltage $V_M'$ which is a fraction of full modulation voltage $V_M$, thereby only partially blocking ion current 20 flow.

If, for example, an individual modulation electrode 22c is selected as the one to "write" a spot, the printing driver commands 44 will call for individual modulation electrode 22c to be provided with a reference voltage $V_H$ while calling for the neighbouring modulation electrodes 22a,b,d,e to be provided with a modulation voltage $V_M$. For an ionographic device having a ratio of h/s of approximately 1.5 excellent compensation of the "writing" modulation electrode 22c is obtained when the modulation electrodes 22b,d on either side of the "writing" modulation electrode 22c are provided with a partial modulation voltage $V_M$ equal to $V_M/2$, replacing $V_M$. The voltage states of the neighbouring modulation electrodes 22a,b,c,d,e in such case, may be written using the aforementioned notation, as: $0, \frac{1}{2}, 1, \frac{1}{2}, 0$.

If it is desired to "write" a spot having a width of two pixels, for the same ionographic device, the states of the modulation electrodes 22a,b,c,d,e, which provide for compensation of the "writing" modulation electrodes 22, for example electrode 22c and electrode 22d, may be written using the aforementioned notation in the form: $0, \frac{1}{2}, 1, 1, \frac{1}{2}$. In all of these cases, the compensation shown is symmetric about the "writing" pixel or pixels so that the corrected ion "beam" retains its average location at the imaging dielectric surface 26. Asymmetric compensation of the ion "beam" has important uses in reducing or eliminating discontinuities in the edges of printed lines or characters sometimes called "jaggedness". These uses are illustrated more fully in the discussion describing Figures 4, 6 and 7.

The states of each of the modulation electrodes 22 can be described in a similar manner and readily implemented as an algorithm by software or firmware in the data processor 46. Modifications of the values and descriptions of these states and their implementation in other ionographic devices of different dimensions or configuration may be made in analogous fashion.

Figure 4 depicts another aspect of the invention useful in the more general case of grey-level printing. In this arrangement, the electronic switches 38, earlier described, are replaced by voltage adjustment devices 64, shown for illustrative purposes as potentiometers 64a,b,c,d,e. A voltage adjustment controller circuit 60 replaces the switch controller 52 of the arrangement shown in Figure 3. Other types of electronic devices having the same function may be substituted for the potentiometers 64a,b,c,d,e and their function integrated within the voltage controller circuit 60. The voltage controller circuit 60 may comprise software or firmware within a central processing unit, for example an expansion board in a personal computer.

In Figure 4, as was the case in the arrangement shown in Figure 3, printing driver commands 44, normally produced in a central processing unit remote from the printing device, are intercepted in a data processor 46 in which a pre-defined algorithm is implemented. The algorithm responds, by conventional data processing means, to a plurality of printing driver commands 44 and constructs a plurality of modified printing commands 48. The modified printing commands 48 then drive the voltage adjustment controller circuit 60 which, in accordance with the modified printing commands 48, positions the potentiometers 64a,b,c,d,e to provide a value of voltage $V_M$ derived from voltage sources 42a,b,c,d,e. The values of voltage $V_M$ picked from potentiometers 64a,b,c,d,e are supplied respectively to electrodes 22a,b,c,d,e. The algorithm for compensating the "writing" pixel spot in this embodiment is pre-defined and implemented in the same manner as that described earlier. In this arrangement the value of partial modulation voltage $V_M$ may be continuously adjusted by the algorithm between the reference voltage $V_H$ and the modulation voltage $V_M$.

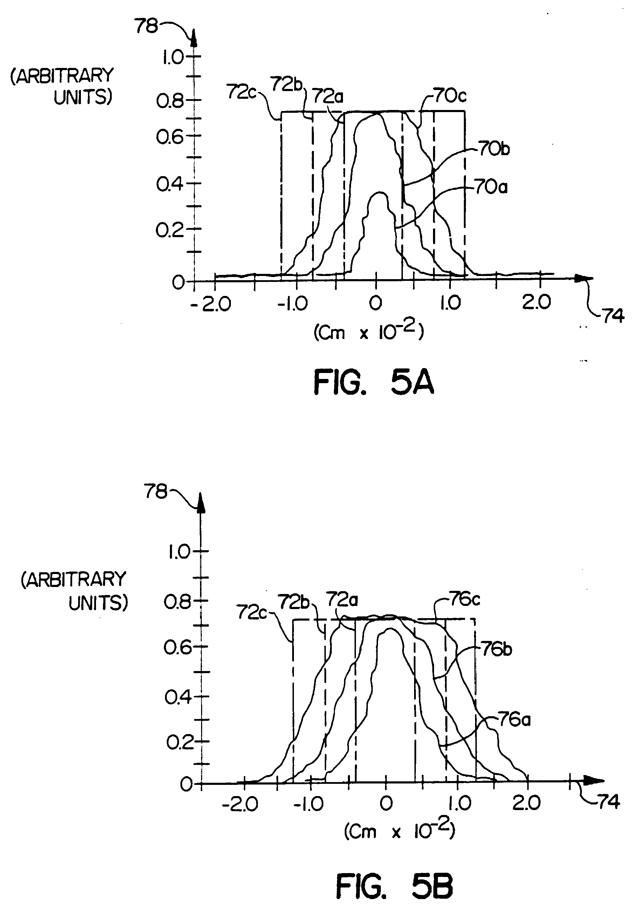

The effects of compensating the "writing" pixel spot are illustrated by reference to Figures 5(a) and 5(b) and Figure 4. Figure 5(a) compares graphically the ion charge output profiles of three values of ion current 20, producing individual spots at the imaging surface, uncorrected for crosstalk. Along the horizontal axis 74 are plotted distances along a width dimension of the spot. Along the vertical axis 78 are plotted values of ion charge output, in arbitrary units, measured at various points along the width dimension of the spot. The charge output profile 70a is of a spot produced by one "writing" modulation electrode, for example, electrode 22c (one pixel). That profile may be compared to the charge profile 70b of a spot produced by two contiguous "writing" modulation electrodes, for example electrodes 22b,c and a charge output profile 70c produced by three contiguous "writing" modulation electrodes, for example electrodes 22b,c,d. All of these profiles may be compared to the respective, ideal output profiles 72a,b,c of one "writing" electrode 22c, two contiguous "writing" electrodes, for example electrodes 22b,c, and three contiguous "writing" modulation electrodes, for example electrodes 22b,c,d. The integrated ion current 20 of the single pixel output profile 70a is about 28 percent of the integrated ion current 20 for an ideal single pixel output profile 72a. The integrated ion current 20 of the two pixel charge output profile 70b is about 98 percent of the integrated ion current 20 of the ideal single pixel charge output profile 72a. The integrated ion current 20 of the three pixel charge output profile 70c is about 194 percent of the integrated ion current 20 of the ideal single pixel charge output profile 72a. In general, for a line of any number n of pixels, printed on an ionographic device with h/s~1.5, the actual, integrated charge output is equal to the ideal, integrated charge output from n-1 modulation electrodes 22, where n is greater than one.

Figure 5(b) compares graphically the ion charge output profiles for three values of ion current 20, after correction for crosstalk by the present invention. Charge output profiles 76a,b,c are shown for an ion "beam", producing individual spots at the imaging dielectric surface 26, from one, two and three modulation electrodes 22, respectively. Along the horizontal axis 74 are plotted distances along the width dimension of the spot. On the vertical axis 78 are plotted values of ion charge output, in arbitrary units, measured at various points along the width dimension of the spot. In contrast to Figure 5(a), the profiles for the modulation electrodes 22 depicted in Figure 5(b) are obtained when the "writing" modulation electrode for example modulation electrode 22c, or group of two modulation electrodes 22b,c or group of three modulation electrodes 22b,c,d is bordered on either side by modulation electrodes 22 held at modulation voltages of $V_M$/2. In the case of a single "writing" modulation electrode 22c, the voltage states of four contiguous modulation electrodes, in the earlier described notation are: 0, $\frac{1}{2}$, 1, $\frac{1}{2}$, 0. For two "writing" modulation electrodes, the voltage states for five contiguous modulation electrodes are: 0, $\frac{1}{2}$, 1, 1, $\frac{1}{2}$, 0. For three "writing" modulation electrodes, the voltage states for six contiguous modulation electrodes are: 0, $\frac{1}{2}$, 1, 1, 1, $\frac{1}{2}$, 0. It is seen from examination of Figures 5(a) and 5(b) that application of partial modulation voltage $V_M$, equal to $V_M$/2, to electrodes immediately adjacent to "writing" modulation electrodes 22c, "writing" modulation electrodes 22b,c or "writing modulation electrodes 22b,c,d, compensates for the loss because of crosstalk of ions from the local ion current 20. In experimental data represented by Figure 5(b), the integral of the output profile 72a,b,c from compensated one, two and three "writing" modulation electrodes 22 was measured to be 106%, 192% and 293% respectively, of the ideal single modulation electrode 22 integrated output. Ideal integrated output would of course be 100%, 200% and 300%, respectively.

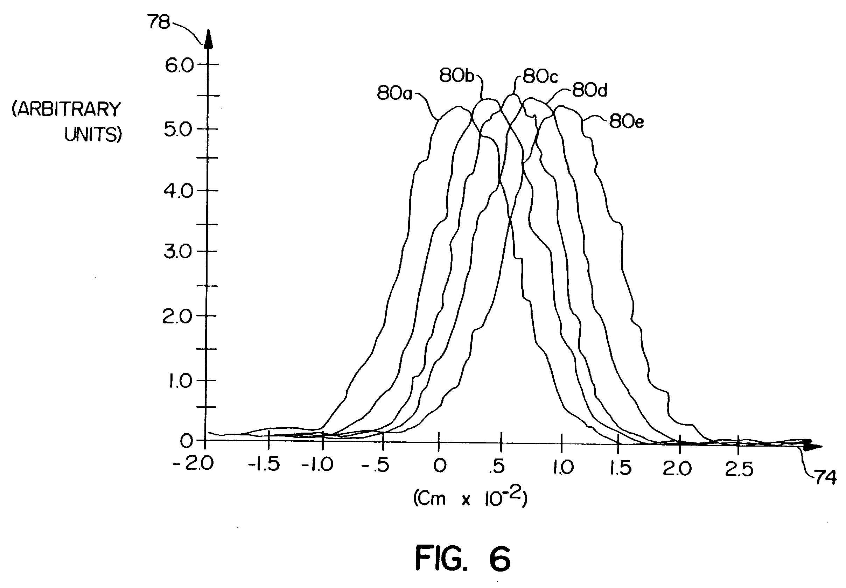

In addition to density compensation of the ion current 20, described above, appropriate choice and application of non-symmetric values of partial modulation voltage $V_M$' are used to steer the ion "beam" to reduce or eliminate discontinuities in the edges of printed lines or characters. This effect is shown by reference to Figure 6 and Figure 4.

Figure 6 depicts graphically a comparison of charge profiles 80a,b,c,d,e of an ion current 20, producing a spot from a single "writing" modulation electrode 22 on the imaging dielectric surface 26, under five separate conditions of partial modulation voltage $V_M$ applied to adjacent modulation electrodes 22. Along the horizontal axis 74 is plotted the distance along the width of the spot, zero being the centroid axis of an output profile 80a for a single modulation electrode 22, symmetrically compensated. Along the vertical axis 78 are plotted values of ion current 20, in arbitrary units, measured at various points along the width dimension of the spot. Development of a pre-defined algorithm for steering the ion beam and implementation of the algorithm in the data processor are discussed in the following paragraphs.

We now consider four contiguous modulation electrodes 22a,b,c,d. The first output profile 80a is produced by voltage states of the four contiguous modulation electrodes 22a,b,c,d, proceeding from electrode 22a to electrode 22d, of: $\frac{1}{2}$, 1, $\frac{1}{2}$, 0, using the previously described notation. All other nearby modulation electrodes 22 are held at a voltage of $V_M$ (0 in the notation). The second output profile 80b is produced by voltage states of the four contiguous modulation electrodes 22a,b,c,d, respectively of: $\frac{1}{4}$, 1, $\frac{3}{4}$, 0. The third output profile 80c is produced by voltage states of the four contiguous modulation electrodes 22a,b,c,d of: 0, 1, 1, 0 . The fourth output profile 80d is produced by voltage states of the four modulation electrodes 22a,b,c,d, respectively of: 0, $\frac{3}{4}$, 1, $\frac{1}{4}$. The fifth output profile 80e is produced by voltage states on the four contiguous modulation electrodes 22a,b,c,d, respectively of: 0, $\frac{1}{2}$, 1, $\frac{1}{2}$. Each of the five output profiles 80a,b,c,d,e is similar in shape and the centroid of each succeeding profile is shifted nearly one quarter of the spacing s between modulation electrodes 22.

If it is assumed from the above results that at most only three contiguous modulation electrodes, for example, a first modulation electrode 22a, a second modulation electrode 22b, and a third modulation electrode 22c, need be addressed to produce a spot, and to obtain the corrected ion current 20 the sum of the three addressed modulation electrodes 22a,b,c must be equal to 2 in the described notation,

then a simple algorithm to position the centroid of the spot produced by a single modulation electrode is:

$$x = 1 - a - {}^b\!/_2 \qquad \text{(Equation 1)}$$

where x is the centroid distance measured from the second "writing" modulation electrode 22b, a is the value of partial modulation voltage applied to the first modulation electrode 22a, and b is the value of partial modulation voltage VM applied to the second modulation electrode 22b. A positive result indicates the centroid x lies in the direction of the third modulation electrode 22c from the second modulation electrode 22b. A negative result indicates the centroid x lies in the direction of the first modulation electrode 22c. Thus, as an example, when the three contiguous modulation electrodes 22a,b,c have respective voltage states of $\frac{1}{2}$, 1, $\frac{1}{2}$, then the centroid is at the second modulation electrode 22b. Two limiting cases are when the contiguous modulation electrodes 22a,b,c have voltage states respectively of 1, 1, 0 or 0, 1, 1. From Equation 1, the centroid x of the spot is then at a distance, respectively, of $-\frac{1}{2}$ and $+\frac{1}{2}$ of modulation electrode spacing s. Experimental results using the algorithm of Equation 1 show high addressability of a single ion "beam" spot.

Use of partial modulation voltage $V_M$' to deflect the ion "beam" is different from the use of partial modulation voltage $V_M$' to increase the density of the ion "beam". In the former instance, the ion "beam" is deflected with little change in its output charge profile. This is an advantage if toners are used which do not support a large number of grey levels, for example, high gamma toners. In such a case, improvement of image quality is obtainable with the present invention because partial modulation voltage $V_M$' can be used to control the position of the ion "beam" spot, without introducing intermediate ion charge output levels.

The foregoing discussion has focussed on the printing of a single ion "beam" spot. It is clear that the invention can be applied to shift the edge of an ion "beam that is much wider than that produced by the ion "beam" spot described above. For instance, the edge of printed line or character can be shifted laterally with more precision than the modulation electrode spacing s without essential change to the charge output profile of the ion current 20. Such a shift will reduce or eliminate jagged edges of such printed lines or characters.

The particular algorithms describe above which steer the ion "beam" are only a few of many which may be employed. Further, by appropriate choice of values of partial modulation voltage $V_M$' and application to the proper modulation electrodes 22, the spot width as well as position may be changed.

Correction algorithms for use in the present invention have been developed for ionographic grey-level printing. These algorithms are used to compute values of partial modulation voltage $V_M$' over three adjacent modulation electrodes much as for the earlier described cases. In general, a grey-level image will be corrected for crosstalk interaction by extending dark printed areas laterally.

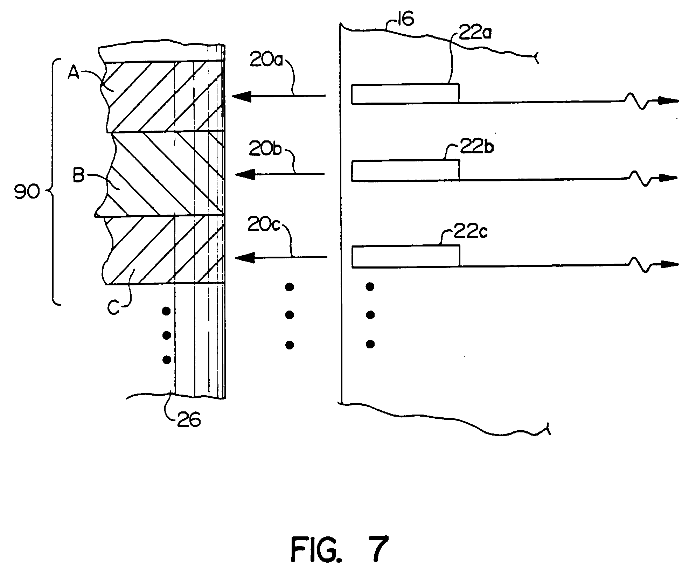

Figure 7 shows a plan view of a portion of a print array 16 containing three modulation electrodes 22a,b, c, of interest for discussion of correction for interaction by means of the present invention, of an edge 90 of a line or character which is to be printed at any number of bits per pixel grey-scale resolution. There is an ion current stream 20a,b,c associated with each modulation electrode 22a,b,c which flows to the imaging surface of the dielectric substrate 24. The printed output associated with each modulation electrode 20a,b,c is A, B and C respectively. The edge 90 is composed of the printed output A,B,C. It is most optically dense (darkest) when a voltage $V_M$ applied to a modulation electrode 22a,b,c has the value of the reference voltage $V_H$, and is least optically dense (whitest) when the voltage $V_M$' is maximum. Of course in grey-level printing, $V_M$ might have any value at any instant.

A typical correction will extend a printed edge which proceeds from a dark area to a light area by applying a partial modulation voltage VM' to the center modulation electrode 22b. When the most optically dense printed output is, for example A, then the algorithm for compensating the center modulation electrode to be corrected by extending the darker printed areas laterally towards the center modulation electrode 22b is as given in Equation 2:

$$B' = A + f(B-A) \qquad \text{(Equation 2)}$$

where B is the compensated printed output and f is a parameter which may be a constant or may be made a function of the difference in printed output A,B,C of neighbouring modulation electrodes 22.

If the edge is reversed, for example C is most optically dense and A is the least optically dense, then the algorithm becomes:

$$B' = C + f(B-C) \qquad \text{(Equation 3)}$$

If f is made constant, say, $\frac{1}{2}$, it can be seen that a binary edge where, in previously described notation, A = 1, B = 0, and C = 0, the algorithm converts the printed output into A = 1, B = $\frac{1}{2}$, C = 0.

One example of implementation of this algorithm is to apply the following logic to the intercepted printing commands 44:

$$\text{If } A > B, \text{ then } j = 1, \text{ else } j = 0 \qquad \text{(Equation 4)}$$

$$\text{If } C > B, \text{ then } k = -1, \text{ else } k = 0 \qquad \text{(Equation 5)}$$

$$\text{If } j + k > 0, \text{ then } B' = A + f(B-A) \qquad \text{(Equation 6)}$$

$$\text{If } j + k < 0, \text{ then } B' = C + f(B-C) \qquad \text{(Equation 7)}$$

The correction is applied to each modulation electrode 22 by viewing it as the center one of a group of three modulation electrodes 22 and proceeding progressively across the print array 16 in steps of one modulation electrode 22.

Corrections are made by reference to the modulation voltage ($V_M$) contained in the incoming printing commands 44.

There may be more efficient implementations of the above algorithm for use with the invention, depending on the nature of the computation. The above algorithm, as all the other algorithms given as examples, may be implemented in software, firmware or specialized hardware.

## Claims

1. A method of positioning and compensating individual pixel charges for a loss of ion current (20) because of crosstalk interaction caused by redirection of an electric field (39) associated with one of a plurality of modulation electrodes (22) held at a modulating voltage ($V_M$) the modulation electrodes (22) being held at a different voltage during printing in an ionographic imaging device having a print head (10) having a source of ions, a medium for moving ions in a stream through a modulation channel (24), held at a reference potential (36) by connection to a reference voltage ($V_H$), and in which a print array (16) including the modulation electrodes (22) is positioned and individually biased by a modulation voltage ($V_M$), in response to a plurality of printing driver commands (44), the modulating voltage creating the electric field which locally removes ions from the stream to modulate said stream projected as an ion current (20) past each of said plurality of modulation electrodes (22) from said print head (10) to form an image of said individual pixel charges on a dielectric surface (26) of a receptor (28), the method being characterised by the steps of:

implementing an image-dependent algorithm for determining a partial modulation voltage ($V_M$') related to each one of the modulation electrodes held at the modulation voltage ($V_M$) adjacent to each modulation electrode held at a different voltage during printing, in response to said printing driver (44) commands, said algorithm determining the partial modulation voltage in image-wise manner, dependent on the crosstalk interaction;
providing, in response to said plurality of printing driver commands (44), a plurality of modified printing commands (48) bearing information relating the reference, modulation and partial modulation voltages in accordance with said algorithm to each modulation electrode, and
addressing each modulation electrode (22) in said print array (16) and biasing each modulation electrode (22) with said reference modulation or the partial modulation voltage in accordance with the modified printing commands.

2. A method as claimed in Claim 1 comprising the further step of:
providing a partial modulation voltage ($V_M$') determined by the algorithm, variable from the modulating voltage ($V_M$) to the reference voltage ($V_H$).

## Patentansprüche

1. Verfahren zum Positionieren und Kompensieren einzelner Pixelladungen für einen Verlust von Ionenstrom (20) infolge von übersprechinteraktion, die durch Umlenken eines elektrischen Feldes (39), das mit einer von einer Mehrzahl von auf einer Modulationsspannung ($V_M$) gehaltenen Modulationselektroden (22) verbunden ist, verursacht wird, wobei die Modulationselektroden (22) auf einer unterschiedlichen Spannung während des Druckens in einer ionographischen Abbildungseinrichtung gehalten werden, die einen Druckkopf (10) mit einer Ionenquelle, einem Medium, das Ionen in einem Strahl durch einen Modulationskanal (24) bewegt, der durch Verbinden mit einer Bezugsspannung ($V_H$) auf einem Bezugspotential (36) gehalten wird, aufweist, und in dem eine Druckanordnung (16), die die Modulationselektroden (22) umfaßt, gelegen ist und einzeln durch eine Modulationsspannung ($V_M$) als Reaktion auf eine Mehrzahl von Drucktreiberbefehlen (44) vorgespannt wird, wobei die Modulationsspannung das elektrische Feld erzeugt, das lokal Ionen von dem Strom entfernt, um den Strom zu modulieren, der als ein Ionenstrom (20) an jeder der Mehrzahl von Modulationselektroden (22) des Druckkopfes (10) vorbei vorwärtsgeworfen wird, um eine Abbildung der einzelnen Pixelladungen auf einer dielektrischen Oberfläche (26) eines Rezeptors (28) zu erzeugen, wobei das Verfahren durch die folgenden Schritte gekennzeichnet ist:

Durchführen eines bildabhängigen Algorithmus zum Bestimmen einer Teilmodulationsspannung ($V_M$'), die mit jeder der auf der Modulationsspannung ($V_M$) gehaltenen Modulationselektroden, die an jede während des Druckens auf einer anderen Modulationsspannung gehaltene Modulationselektrode grenzt, in Beziehung steht, als Reaktion auf die Drucktreiberbefehle (44), wobei der Algorithmus die Teilmodulationsspannung in einer bildweisen Art abhängig von der übersprechinteraktion bestimmt;

Erzeugen, als Reaktion auf die Mehrzahl von Drucktreiberbefehlen (44), einer Mehrzahl von modifizierten Druckbefehlen (48), die Information betreffend die Bezugs-, Modulations- und Teilmodulationsspannungen tragen, nach Maßgabe des Algorithmus für jede Modulationselektrode und

Adressieren jeder Modulationselektrode (22) in der Druckanordnung (16) und Vorspannen jeder Modulationselektrode (22) mit der Bezugsmodulations- oder der Teilmodulationsspannung nach Maßgabe der modifizierten Druckbefehle.

2. Verfahren nach Anspruch 1, weiter umfassend den Schritt:
Erzeugen einer durch den Algorithmus bestimmten Teilmodulationsspannung ($V_M'$), die von der Modulationsspannung ($V_M$) bis zu der Bezugsspannung ($V_H$) veränderbar ist.

**Revendications**

1. Procédé de positionnement et de compensation des charges de pixels individuels vis-à-vis de la perte de courant ionique (20) due à l'interaction de diaphonie provoquée par la redirection d'un champ électrique (39) associé à une électrode parmi plusieurs électrodes de modulation (22) maintenue à une tension de modulation ($V_M$), les électrodes de modulation (22) étant maintenues à une tension différente pendant l'impression dans un dispositif de formation d'image ionographique comportant une tête d'impression (10) ayant une source d'ions, un support destiné à déplacer les ions dans un flux par l'intermédiaire d'un canal de modulation (24), maintenu à un potentiel de référence (36) par une liaison à un potentiel de référence ($V_H$), et dans lequel un réseau d'impression (16) comprenant les électrodes de modulation (22) est positionné et est polarisé individuellement par une tension de modulation ($V_H$), en réponse à une multitude d'ordres de circuits d'impression (44), la tension de modulation créant le champ électrique qui élimine localement des ions du flux afin de moduler ledit flux projeté sous forme d'un courant ionique (20) devant chaque électrode desdites plusieurs électrodes de modulation (22) depuis ladite tête d'impression (10) afin de former une image desdites charges de pixels individuels sur une surface diélectrique (26) d'un récepteur (28), le procédé étant caractérisé par les étapes consistant à :

mettre en oeuvre un algorithme dépendant de l'image, destiné à déterminer une tension de modulation partielle ($V_M'$) associée à chacune des électrodes de modulation maintenues à la tension de modulation ($V_M$) adjacente à chaque électrode de modulation maintenue à une tension différente pendant l'impression, en réponse auxdits ordres de circuits d'attaque d'impression (44), ledit algorithme déterminant la tension de modulation partielle d'une façon conforme à l'image, qui dépend de l'interaction de diaphonie,

procurer, en réponse à ladite multitude d'ordres de circuits d'attaque d'impression (44), une multitude d'ordres d'impression modifiés (48) portant des informations se rapportant aux tensions de référence, de modulation et de modulation partielle conformément audit algorithme vers chaque électrode de modulation, et adresser chaque électrode de modulation (22) dans ledit réseau d'impression (16) et polariser chaque électrode de modulation (22) avec ladite tension de modulation de référence ou la tension de modulation partielle conformément aux ordres d'impression modifiés.

2. Procédé selon la revendication 1 comprenant l'étape supplémentaire consistant à :
procurer une tension de modulation partielle ($V_M'$) déterminée par l'algorithme, variable entre la tension de modulation ($V_M$) et la tension de référence ($V_H$).

FIG. 1

FIG. 2A

FIG. 2B

FIG. 3

FIG. 4

FIG. 5A

FIG. 5B

14

FIG. 6

EP 0 578 882 B1

FIG. 7